(19) Europäisches Patentamt

European Patent Office

Office européen des brevets

(11) **EP 1 471 301 A2**

(12) **EUROPEAN PATENT APPLICATION**

(43) Date of publication:
**27.10.2004 Bulletin 2004/44**

(51) Int Cl.$^7$: **F16N 25/00**, F16N 11/04

(21) Application number: **04009416.1**

(22) Date of filing: **21.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **25.04.2003 JP 2003121953**

(71) Applicant: **FANUC LTD**
**Minamitsuru-gun, Yamanashi 401-0597 (JP)**

(72) Inventors:
• **Kojima, Kunio, R. 14-506, FANUC Manshonharimoni**
**Minamitsuru-gun Yamanashi 401-0511 (JP)**
• **Funakoshi, Akira, R. 14-406, FANUC Manshonharimomi**
**Minamitsuru-gun Yamanashi 401-0511 (JP)**

(74) Representative: **Schmidt, Steffen J., Dipl.-Ing.**
**Wuesthoff & Wuesthoff,**
**Patent- und Rechtsanwälte,**
**Schweigerstrasse 2**
**81541 München (DE)**

(54) **Quantitative distributor**

(57)    A quantitative distributor which can change its discharge volume, can reduce a fluctuation range of the discharge volume, can quickly fill a path from the distributor to an injection point with a substance, and can clean the injection point by the substance. In the distributor, a discharge volume of the substance from the distributor corresponds to the pressure of the substance supplied to the distributor, and an elastic body (4) pressurizing the piston (2) has a Young's modulus which is variable by a position of the piston (2).

**EP 1 471 301 A2**

## Description

BACKGROUND OF THE INVENTION

1. Field of the Invention

The present invention relates to a quantitative distributor which discharges a desired quantity of a powder or a liquid such as a lubricant.

2. Description of the Related Art

A quantitative distributor is known as a device which discharges a predetermined volume of fluid such as liquid or powder and distributes the fluid to a required place. The quantitative distributor is used, for example, for injecting a predetermined volume of lubricant into each of lubricating points of a machine or a system. This distributor receives a fluid such as a lubricant fed by an intermittently activated pump, and discharges a fluid or a substance stored in a cylinder chamber of the distributor by pushing up a piston of the distributor by a pressure of the fluid fed by the pump.

The quantitative distributor includes two types; one type discharges the substance when the substance is pressurized by the pump, and the other type discharges the substance when the substance is depressurized. Both discharge a predetermined volume of the substance by moving of the piston over its full stroke.

In the former pressurized discharging distributor, the piston of the distributor is pushed up against a force of an elastic body such as a spring when the piston is pressurized by a substance and, then, a substance stored in the cylinder chamber is discharged. The volume of discharged substance corresponds to a maximum distance of movement of the piston. Then, when the piston is depressurized, the piston is pushed down by the force of the elastic body, whereby the substance is fed and stored in the cylinder chamber.

On the other hand, in the latter depressurized discharging distributor, the piston of the distributor is pushed up against a force of an elastic body when the piston is pressurized, then a substance is fed and stored in the cylinder chamber. The volume of the substance is constant because the piston is moved over its full stroke. When the piston is depressurized, the piston is pushed down by the force of the elastic body, whereby the substance stored in the cylinder chamber is discharged.

As described above, in the both types of distributor, the distance of movement of the piston is limited to a constant length, whereby the volume of metered or fed substance and the discharge volume of the substance are determined as a constant volume.

In the above mentioned distributor of the prior art, when the discharge volume or the distribute volume must be changed, it is necessary to exchange a member limiting the distance of movement of the piston to change the volume of the substance to be stored in the cylinder chamber. Thus, it is not easy to change the discharge volume of the substance.

SUMMARY OF THE INVENTION

Therefore, it is an object of the present invention to provide a quantitative distributor able to change the discharge volume of a substance.

According to the invention, there is provided a quantitative distributor including a cylinder, a piston positioned in the cylinder, an elastic body pressurizing the piston, the piston being moved by a pressure of a substance intermittently applied to the distributor against a force of the elastic body, a predetermined volume of the substance to be discharged from the distributor being determined by a distance of movement of the piston in the cylinder, wherein a discharge volume of the substance from the distributor corresponds to the pressure of the substance supplied to the distributor.

The elastic body pressurizing the piston may have a Young's modulus which is varied by a position of the piston.

The elastic body may include a plurality of elastic elements arranged in series, each of which has a different Young's modulus from each other.

The elastic body may include a plurality of elastic elements arranged in parallel such that start points of compression of the elastic elements are different from each other due to the position of the piston.

Further, according to the invention, there is provided a quantitative distributor comprising a cylinder, a piston positioned in the cylinder, an elastic body pressurizing the piston, the piston being moved by a pressure of a substance intermittently applied to the distributor against a force of the elastic body, a predetermined volume of the substance to be discharged from the distributor being determined by a distance of movement of the piston in the cylinder, wherein an inflow side and a discharge side of the cylinder chamber separated from each other by the piston communicate with each other by movement of the piston over a distance more than the distance of movement of a normal operation, such that a conduit for supplying the substance to the distributor and a delivery port of the distributor communicate with each other.

The inflow side and the discharge side of the cylinder chamber separated from each other by the piston may communicate with each other by expanding an inner diameter of the cylinder at the point in which the piston is moved over the distance more than the distance of movement of the normal operation.

BRIEF DESCRIPTION OF THE DRAWING

The above and other objects, features and advantages of the present invention will be made more apparent from the following description of the preferred embodiments thereof with reference to the accompanying drawings, wherein:

Fig. 1 is a view for explaining a principle of operation of a quantitative distributor of the invention;
Fig. 2 is a schematic cross-sectional view of a main part of a first aspect of the distributor;
Fig. 3 a schematic cross-sectional view of a main part of a second aspect of the distributor;
Fig. 4 is a perspective cross-sectional view of one embodiment of the distributor;
Fig. 5 is a cross-sectional view of the distributor of Fig. 4 to which a pressurizing force is not applied;
Fig. 6 is a cross-sectional view of the distributor of Fig. 4 to which a pressurizing force is applied and which discharges a substance;
Fig. 7 is a cross-sectional view of the distributor of Fig. 4 while depressurized;
Fig. 8 is a cross-sectional view of the distributor of Fig. 4 continuously discharging the substance; and
Fig. 9 is a view for explaining a principle of operation of a quantitative distributor of a prior art.

DETAILED DESCRIPTION

Firstly, the principle of operation of the invention will be described.

Similar to a conventional distributor, a quantitative distributor according to the invention can discharge a substance stored in a cylinder chamber of the distributor by moving a piston positioned in the cylinder, against a force of an elastic body in the cylinder such as a spring, using a pressurizing force intermittently applied to the piston. Therefore, a discharge volume of the substance is determined by a distance of movement of the piston, and the distance is determined by an amount of compression or extension of the elastic body such as a spring. In the conventional distributor, the volume of a metered and discharged substance is determined as a constant volume by limiting the distance of movement of the piston to a constant amount, as described above. Contrarily, in the distributor of the invention, the distance of movement of the piston or the discharge volume of the substance corresponds to a pressure of the substance supplied to the distributor.

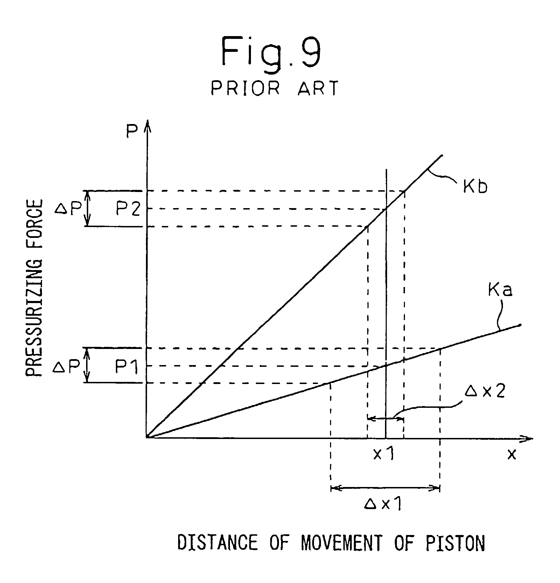

Fig. 9 is a view for explaining the relation between the distance of movement x of the piston and the pressurizing force P applied to the piston. In Fig. 9, a transverse axis indicates the distance of movement x of the piston and a vertical axis indicates the pressurizing force P applied to the piston. Further, in Fig. 9, a first case in which a Young's modulus or a spring constant Ka of an elastic body for moving the piston is relatively low, and a second case in which a Young's modulus or a spring constant Kb of the elastic body for moving the piston is higher than Ka, are compared.

The distance of movement of the piston for discharging a desired discharge volume of a substance such as a lubricant is assumed to be x1. When the elastic body has the lower Young's constant Ka, a pressurizing force P1 to pressurize the piston is also low. On the other hand, when the elastic body has the higher Young's constant Kb, a higher pressurizing force P2 is necessary to pressurize the piston.

Then, if the pressurizing force P fluctuates in the range of $\Delta P$ by, for example, a fluctuation of an output of a pump feeding the substance to the distributor, as shown in Fig. 9, a fluctuation range of the distance of movement of the piston $\Delta x2$ is relatively small when the elastic body having the higher Young's modulus Kb is used. However, the fluctuation range $\Delta x1$ is relatively large when the elastic body having the lower Young's modulus Ka is used.

Thus, when an elastic body having a relatively high Young's modulus is used to move the piston of the distributor, a range of fluctuation of the discharge volume of the substance due to the fluctuation of the pressurizing force produced by the substance supplied to the distributor is relatively low such that the distributor may discharge a desired, or more precise, volume of the substance. However, the pressurizing force applied to the piston must be considerably high. on the other hand, when the elastic body has a relatively low Young's modulus, the pressurizing force applied to the piston does not need to be high. However, the range of fluctuation of the discharge volume of the substance become disadvantageously larger.

Therefore, the distributor according to the invention uses an elastic body having a Young's modulus which is variable due to an amount of compression or extension of itself. In more detail, the Young's modulus of the elastic body becomes larger as the amount of compression or extension becomes larger.

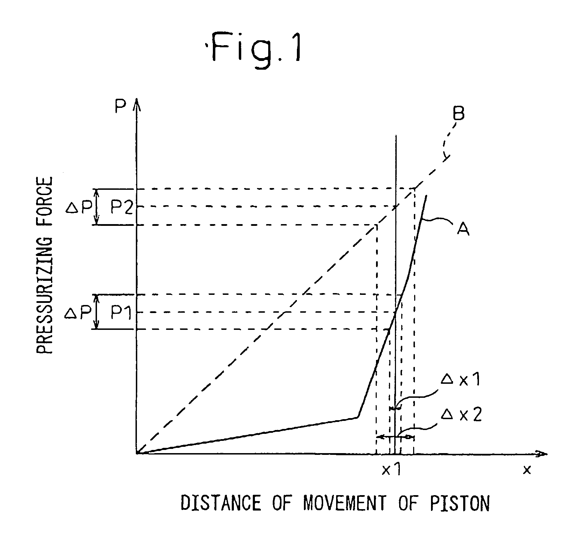

Fig. 1 indicates relations between the distance of movement of the piston and the pressurizing force P. In Fig. 1, a solid line A represents a relation when the elastic body has a variable Young's modulus, and a dashed line B represents a relation when the elastic body has a constant Young's modulus.

If distance of movement of the piston required for discharging a desired volume of the substance is x1 on the solid line A, a required pressurizing force P1 is relatively low. On the other hand, in the dashed line B, a required pressurizing force P2 is considerably higher than P1. When these pressurizing forces fluctuate in the range of $\Delta P$ by a fluctuation of an output of a pump feeding the substance to the distributor, the fluctuation range $\Delta x1$ of the distance of movement of the piston is relatively small in the solid line A, however, the fluctuation range $\Delta x2$ is considerably large in the dashed line B. Thus, by using the quantitative distributor, according to the invention, using the elastic body having the variable Young's modulus, the pressurizing force or the output of the pump feeding the substance may be set relatively low. Further, when the fluctuation of the pressurizing force of the piston occurs by, for example, the fluctuation of the output of the pump, the fluctuation of discharge volume of the substance is smaller than that of the constant Young's modulus, whereby a precise and desired volume of the substance may be discharged.

The elastic body having the variable Young's modulus may be provided by arranging a plurality of elastic elements in series or in parallel, or by forming a combination thereof.

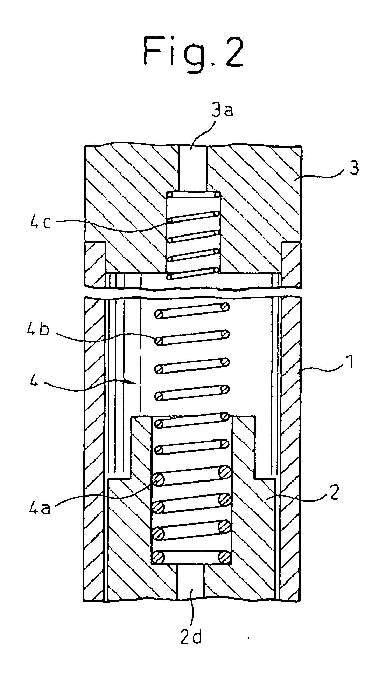

Fig. 2 is a cross-sectional view of main part of a first aspect of a quantitative distributor according to the invention. A piston 2 is positioned in a cylinder 1 of the distributor, and an elastic body or a spring assembly 4 is arranged between the piston 2 and a cap 3 attached to one end (an upper end in Fig. 2) of the cylinder 1. The elastic body 4 is formed by arranging elastic elements or springs, having different spring constants, in series or integrally. A part of the elastic body 4 may be another elastic element such as rubber. In this first aspect as shown in Fig. 2, springs 4a, 4b and 4c, sequentially, from the one having a larger spring constant, are arranged in series.

A cylinder chamber between the piston 2 and the cap 3 is filled with a fluid or a substance. When a pump (not shown) feeding the substance to the distributor is activated, a pressurizing force of the substance is applied to the piston 2 such that the piston 2 is moved or pushed against a force of the elastic body 4, whereby the substance is discharged from a delivery port 3a arranged in the cap 3. Next, when application of the pressurizing force to the piston 2 is stopped, the piston 2 is pushed down by the force of the elastic body 4 and it returns to its initial position. While the piston 2 is pushed down, the substance flows into the cylinder chamber through a hole 2d arranged on the piston 2 so as to fill the chamber with the substance again.

Next, a way of varying the spring constant of the elastic body or the spring assembly including the series of springs or elastic elements will be described. A whole spring constant K of the spring assembly including the series of springs, (assuming that the number of springs is n, and the springs have spring constants k1, k2 ... kn-1, kn (k1, k2 ... kn-1, kn > 0), respectively) may be calculated as shown below:

$$1/K = 1/k1 + 1/k2 + ... + 1/kn\text{-}1 + 1/kn \qquad (1)$$

when the substance is pressurized and the piston is moved, all of the springs are uniformly pressurized by the piston. As the pressurizing force of the piston is increased, one of the springs (a spring 4c in Fig. 2) is compressed to its maximum amount of compression such that the spring can no more be compressed, whereby the spring may be considered to be a rigid body. Assuming that a spring constant of this spring, or the rigid body, is kn, the whole spring constant K' of the spring assembly is represent as below:

$$1/K' = 1/k1 + 1/k2 + ... + 1/kn\text{-}1 \qquad (2)$$

From equations (1) and (2), it is seen that 1/K - 1/K' = 1/kn > 0, therefore, 1/K > 1/K' or K' > K (∵ K > 0, K' > 0). Thus, as the pressurizing force of the piston is increased, the whole spring constant is also increased.

Then, as the pressurizing force of the piston is further increased, another spring (a spring 4b in Fig. 2) is compressed to its maximum amount of compression such that the spring may be considered a rigid body, whereby the whole spring constant is further increased by the same reason as described above. In other words, every spring being considered as a rigid body increases the whole spring constant or the Young's modulus of the elastic body 4. In this manner, a distributor using the elastic body having a variable Young's modulus, as described in Fig. 1, may be provided.

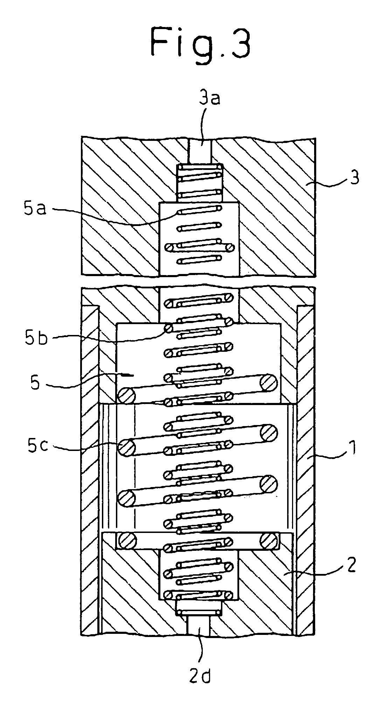

Fig. 3 is a cross-sectional view of main part of a second aspect of a quantitative distributor according to the invention. This second aspect is different from the first aspect in that an elastic body or a spring assembly 5 arranged instead of the elastic body 4 between the piston 2 and the piston 3 is formed by arranging an arbitrary number of elastic elements or springs in parallel. In this second aspect, the elastic body 5 for moving the piston 2 is formed by arranging springs 5a, 5b and 5c having spring constants which may be different or may be same. The elastic elements also may be another elastic element such as rubber.

In the elastic body 5 including the springs arranged in parallel, from the first, two ends of one spring 5a abut on the piston 2 and the cap 3, respectively, but other springs 5b and 5c are arranged such that one end of each of the springs 5b and 5c abut on the cap 3 after the piston 2 is moved. In other word, when the pressurizing force is not applied, one end of each of the springs 5b and 5c does not abut on the cap 3, therefore, the springs 5b and 5c are not compressed. When the substance is pressurized and the pressurizing force is applied by the piston, the distance between the piston 2 and the cap 3 or the end of the stroke of the piston 2 is shortened. When the pressurizing force is further increased, the end of the spring 5b abuts on the cap 3, therefore, the number of springs pushing back the piston 2 is increased by one. Now, a whole spring constant of the elastic body 5 intending to push back the piston 2 is increased by the increase of the number of the compressed springs. When the pressurizing force is further increased, the end of the spring 5c abuts on the cap 3, and the spring constant of the elastic body 5 is further increased. In this manner, the elastic body having the variable Young's modulus as shown in Fig. 1 may be formed.

Assuming that the number of springs is n (n is an arbitrary number and is three in the example shown in Fig. 3), and a spring constant of each of the springs are k1, k2, ... , kn-1, kn (k1, k2, ... , kn-1, kn > 0), the whole spring constant K of the elastic body 5 or the spring assembly is represent as below:

$$K = k1 + k2 + ... + kn-1 + kn \qquad (3)$$

Assuming that only one spring (the spring 5a in the example of Fig. 3) abuts on the cap 3 from the first and other springs abut the cap 3 sequentially as the pressurizing force is increased, the whole spring constant K is increased as below:

$$K = k1 \rightarrow K = k1 + k2 \rightarrow K = k1 + k2 + k3 \rightarrow ...$$

In this manner, the elastic body using the variable Young's modulus as shown in Fig. 1 may be obtained.

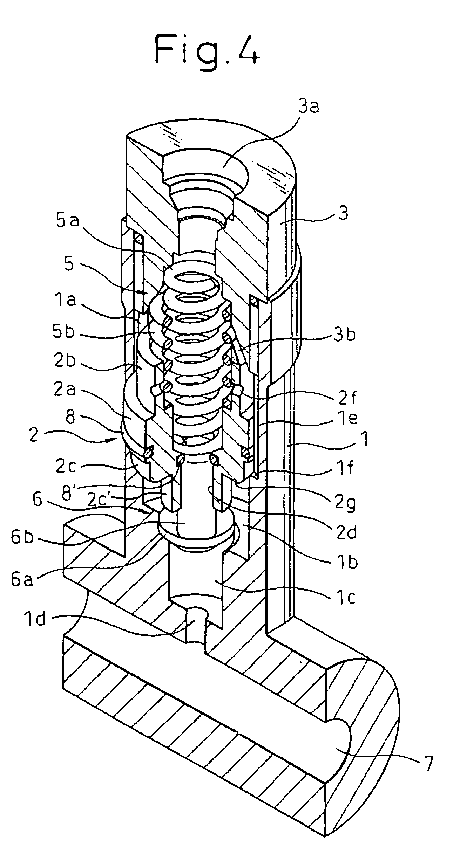

Fig. 4 is a perspective cross-sectional view of one embodiment of a quantitative distributor of the invention, in which an elastic body or a spring assembly is formed by two elastic elements or springs arranged in parallel.

The quantitative distributor includes a cylinder 1 having cylinder chambers 1a, 1b and 1c. The cylinder chambers 1a and 1b separated from each other by a piston 2 form a large diameter part of cylinder, and the cylinder chamber 1c form a small diameter part of cylinder. The piston 2 includes a main piston part 2a positioned in the large diameter of a cylinder and dividing the chamber into the two chambers 1a and 1b, reduced diameter parts 2b and 2c arranged on axial ends of the main piston part 2a, respectively, and a reduced diameter part 2c' arranged on the top of the part 2c having a reduced diameter such that the part 2c' can be inserted into the cylinder chamber 1c. A cap 3 is mounted on one end (an upper end in Fig. 4) of the cylinder 1, and has a delivery port 3a for discharging a substance. A hole provided with a bottom for housing a spring assembly as an elastic body is arranged on one side of the cap 3 directed to the piston 2, and a hole provided with a bottom for housing the spring assembly is arranged on one side of the piston 2 directed to the cap 3. A diameter of the hole of the cap 3 is different from a diameter of the hole of the piston 2. This spring assembly 5 forms an elastic body having a variable Young's modulus or spring constant by arranging two springs or elastic elements in parallel between the piston 2 and the cap 3. A spring 5a of the two springs having a smaller diameter always abuts on the bottoms of the holes of the piston 2 and the cap 3. Another spring 5b having a larger diameter abuts on the bottom of the hole of the piston 2, but does not abut on the cap 3, when the piston 2 is moved downward in Fig. 4 or toward the cylinder chamber 1c. Also, the spring 5b having the larger diameter may be attached to the cap 3 and compressed after the piston 2 is moved upward.

A through hole 2d is arranged on the piston 2 at the reduced diameter parts 2c and 2c', and a valve 6 having a valve plug 6a and a shaft 6b to be inserted in the hole 2d. The shaft 6b may open and close the hole 2d. The valve plug 6a may function as a check valve which permits a substance to flow from a conduit 7 to the cylinder chamber 1b (i.e., from below to above) through the cylinder chamber 1c, but does not permit a reverse flow of the substance. The conduit 7 may be a pipe for the substance supplied to the distributor by a pump (not shown), and the substance can be introduced into the cylinder 1 through a hole 1d arranged on the cylinder.

The larger diameter part of the cylinder 1 is divided, by the main piston part 2a of the piston 2, into the discharge side cylinder chamber 1a directed to the cap 3 and the inflow side cylinder chamber 1b directed to the cylinder chamber 1c having the smaller diameter. Further, the cylinder chamber 1a includes a gap 1e having a larger diameter than the cylinder chamber 1a. A path or a hole 3b is arranged on the cap 3 to maintain a fluid communication between the cylinder chamber 1a and the delivery port 3a even when the top of the reduced diameter part 2b of the piston 2 abuts on the cap 3. Also, a hole 2f is arranged on the reduced diameter part 2b to permit a fluid communication between the inside and the outside of the part 2b. Numerals 8 and 8' indicate O-rings for sealing the substance.

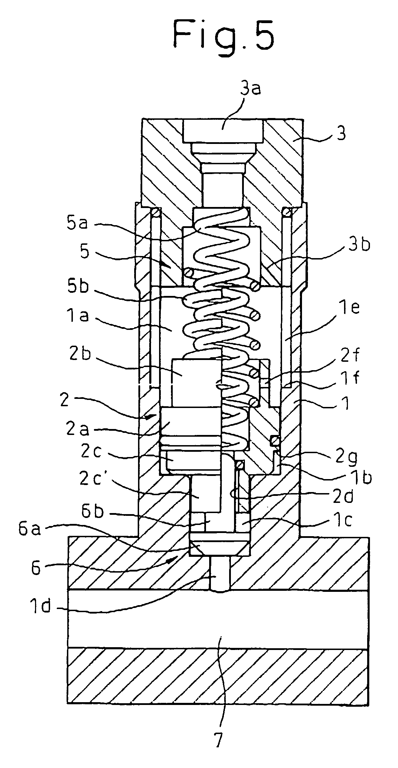

Next, an operation of the embodiment will be described using Figs. 5 - 7.

In Fig. 5, the pump to supply the substance to the distributor is not activated and the pressure of the substance in the conduit 7 is low. In this position, the piston 2 is pushed down by the force of the elastic body or the spring assembly 5 and the end of the reduced diameter part 2c abuts on an end surface of the cylinder chamber 1b which forms a boundary between the cylinder chamber 1b and 1c. Further, the valve plug 6a of the valve 6 abuts on an end surface of the cylinder provided with the hole 1d, and the shaft 6b of the valve 6 closes the hole 2d formed in the piston 2.

When the pump is activated and the pressure of the substance in the conduit is increased, the substance at first pressurizes the valve plug 6a of the valve 6. Because the valve plug 6a is arranged such that the substance may flow from a conduit 7 to the cylinder chamber 1b, i.e., from below to above, the pressure of the substance may act on the end surface of the reduced diameter part 2c of the piston 2, and the piston 2 and the valve 6 is moved or pushed upward in Fig. 5. At the beginning of this movement of the piston 2, only the spring 5a of the spring assembly 5 is compressed by the movement of the piston 2 and, therefore, the piston 2 can be moved even by relatively low pressurizing force. By moving up of the piston 2, the substance may flow into the cylinder chamber 1b defined by the reduced diameter part 2c of the piston 2 and may compress an end surface of the main piston part 2a having a larger diameter. Next, when the piston is further moved up such that one end of the other spring 5b abuts on the end of the cap 3, the spring is also be compressed and the spring constant of the elastic body 5 is increased. Then, the piston 2 is stopped at a position in which the opposing force of the elastic body 5 is balanced with the outputted pressure of the pump for feeding the substance.

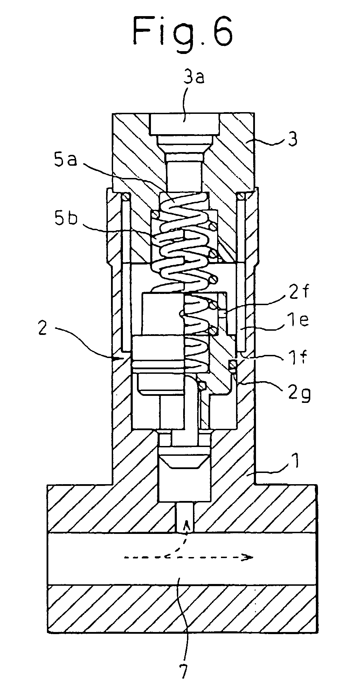

Discharge volume of the substance stored in the cylinder chamber 1a from the delivery port 3a corresponds to a volume pushed out by moving up of the piston 2. Fig. 6 shows a position in which the piston is pressurized and pushed up by the substance. In this condition, if the pressurizing force applied to the piston 2 fluctuates due to, for example, a fluctuation of the output of the pump, a fluctuation of the distance of movement of the piston 2 is small because the whole spring constant of the elastic body 5 is increased as described above, and a more precise volume of the substance may be discharged.

In a normal discharging of the substance, as shown in Fig. 6, discharging of predetermined volume of the substance is carried out when the fluid communication between the cylinder chamber 1a and 1b is intercepted, in other word, an end portion 2g formed on the main piston part 2a to form the reduced diameter part 2c does not reach a lower end portion 1f of the gap 1e.

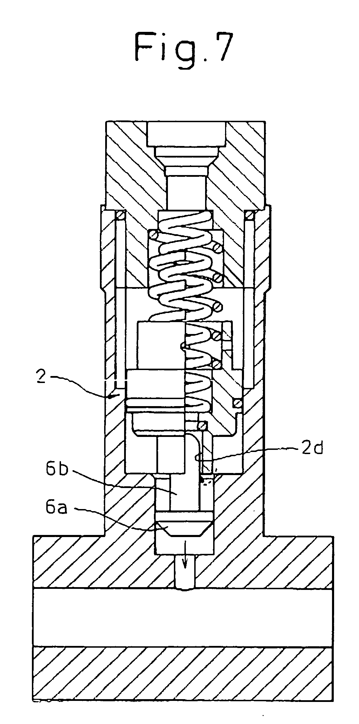

Fig. 7 shows a position in which the pump is switched off and the pressure of the substance is decreased. In this condition, a downward force is applied to the piston 2 by an opposing or repulsive force of the elastic body 5. This downward force is acts on the substance stored in the cylinder chamber 1b, and the pressure of the substance is applied to the valve plug 6a of the valve 6. As the valve plug 6a does not permit the substance to flow the cylinder chamber to the conduit 7, i.e., from above to below, the valve plug 6a is pressurized downward and pushed down. As a result, the shaft 6b of the valve 6 opens the hole 2d to communicate the cylinder chamber 1a with the cylinder chamber 1b, then the substance in the cylinder chamber 1b flows into the cylinder chamber 1a through the hole 2d. In this regard, the volume of the substance flowing into the cylinder chamber 1a corresponds to the discharge volume. Finally, the distributor returns to a waiting position as shown in Fig. 5.

The substance can be injected to an injection point by periodically repeating the above operation. Although the above embodiment is configured by applying the present invention to the pressurized discharging distributor, the invention may be applied to the depressurized discharging distributor.

The operation described above is a normal quantitative discharging operation, and a volume of the substance discharged by the operation is generally very small. on the other hand, when the distributor is installed in a machine or a system, a path such as a conduit from the distributor to each injection point is not filled with a substance or a lubricant. Thus, the substance does not reach to the injection point immediately even though the above operation is carried out and a predetermined volume of the substance is discharged by the distributor. Therefore, it is necessary to discharge a considerably large amount of the substance from the distributor in order to fill the conduit from the distributor to the injection point with the substance. However, it requires a very long time to fill the conduit with the substance by repeating the normal discharging operation as described in Figs. 5 - 7.

Also, components of the injection point to be lubricated, such as a bearing, a linear guide and a ball screw may be contaminated by adhesion of dust or cuttings generated by a machine tool, etc. In order to remove them and clean the components, a large amount of the substance or the lubricant must be supplied to the injection point. In this case, the components cannot be sufficiently cleaned by repeating the normal discharging operation of a very low flow rate of the substance.

Thus, in this embodiment, a pressure of the pump is further increased such that a pressurizing force larger than that of the normal discharging operation is applied to the piston 2. The piston 2 may be pushed by the pressurizing force until the end portion 2g of the reduced diameter part 2c of the piston 2 is positioned above the end portion 1f of the gap 1e of the cylinder 1. The easiest way to do this is to drive the pump such that the end of the reduced diameter part 2b of the piston 2 abuts on the end surface of the cap 3, or the piston 2 is moved over its full stroke, by the pressure of the pump.

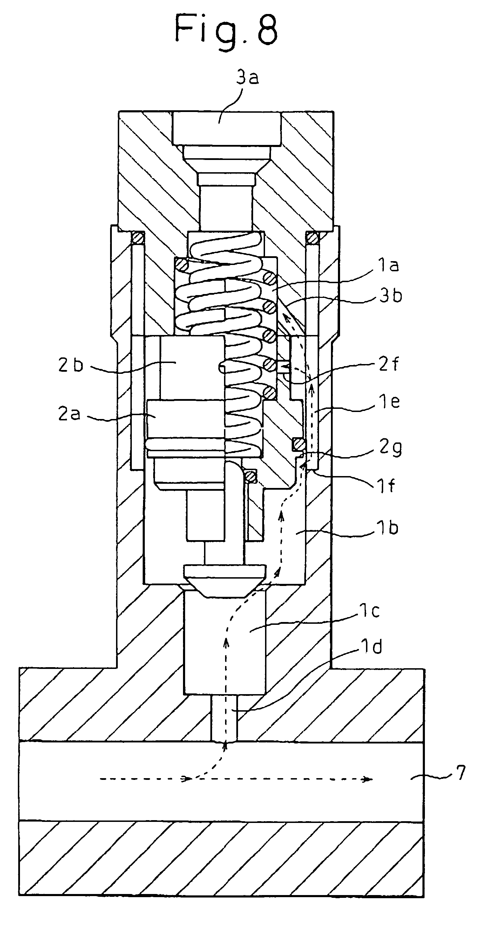

Fig. 8 indicates this position of the piston of the distributor. When the piston 2 is moved up until the end portion 2g is positioned above the end portion 1f, as shown in Fig. 8, the conduit 7, the cylinder chamber 1c, the cylinder chamber 1b, the gap 1e and the cylinder chamber 1a may communicate with each other. Further, the cylinder 1a may communicate with the delivery port 3a even though the end of the reduced diameter part 2b of the piston 2 abuts on the end surface of the cap 3, because the holes 2f and 3b maintain the communication between the cylinder chamber 1a and the port 3a. As a result, a fluid path from the conduit 7 to the delivery port 3a may be achieved. Therefore, the substance supplied to the distributor by the pump may be continuously discharged from the distributor in much larger flow rate than that of the normal discharging operation by this path, whereby the conduit from the distributor to the injection point can be filled with the substance quickly. Also, for the same reason, the bearing, the linear guide and the ball screw of the injection point or the lubricating point can be easily cleaned by the substance or the lubricant.

As described above, in this embodiment, the discharge volume per time is determined by the pressure for supplying the substance such as a lubricant to the distributor. Therefore, the discharge volume of the substance may be arbitrarily changed as desired by varying the pressure of the pump supplying the substance to the distributor. Further, the fluctuation of the discharge volume by the fluctuation of the pressure may be reduced such that a precise and desired volume of the substance is discharged.

As the piston is not moved over its full stroke in a normal or fixed-volume discharging operation, the quantitative distributor of the invention may discharge the substance in a larger flow rate than that of the normal discharging operation by applying a larger pressurizing force than that of the normal discharging operation to the piston so as to move the piston over a longer distance than that of the normal discharging operation. (In a conventional distributor, as the piston is moved over its full stroke in the fixed-volume discharging operation, the piston cannot be moved further.) In this manner, at the beginning of use of the distributor, it may be possible to fill a conduit from the distributor to an injection point and to clean the injection point such as a lubricant point.

Although the elastic body including the elastic elements or springs arranged in parallel in the embodiment of Figs. 4 - 8, the elastic elements may be arranged in series, as shown in Fig. 2, such that a Young's modulus or a spring constant of the elastic body may change due to the position of the piston. Further, the elastic body may be configured by combination of the elastic elements arrange in series and in parallel.

The quantitative distributor of the invention may easily change the discharge volume of a substance, does not need a relatively high pressurizing force to be applied to the substance, and may reduce the fluctuation of the discharge volume. Also, because the distributor may continuously discharge the substance by being applied a larger pressurizing force than that of a normal discharging operation to a piston of the distributor, the distributor can quickly fill a conduit from the distributor to an injection point with the substance when the distributor is installed to a machine or a system, therefore, the work efficiency of the distributor may be raised. Further, the distributor may clean the injection point by continuously discharging the substance to the point.

While the invention has been described with reference to specific embodiments chosen for the purpose of illustration, it should be apparent that numerous modifications could be made thereto, by one skilled in the art, without departing from the basic concept and scope of the invention.

## Claims

1. A quantitative distributor comprising a cylinder, a piston positioned in the cylinder, an elastic body pressurizing the piston, the piston being moved by a pressure of a substance intermittently applied to the distributor against a force of the elastic body, a predetermined volume of the substance to be discharged from the distributor being determined by a distance of movement of the piston in the cylinder, wherein
   a discharge volume of the substance from the distributor corresponds to the pressure of the substance supplied to the distributor.

2. A quantitative distributor as set forth in claim 1, wherein the elastic body pressurizing the piston has a Young's modulus which is variable by a position of the piston.

3. A quantitative distributor as set forth in claim 2, wherein the elastic body comprises a plurality of elastic elements arranged in series, each of which has a different Young's modulus from each other.

4. A quantitative distributor as set forth in claim 2, wherein the elastic body comprises a plurality of elastic elements arranged in parallel such that start points of compression of the elastic elements are different from each other due to the position of the piston.

5. A quantitative distributor comprising a cylinder, a piston positioned in the cylinder, an elastic body pressurizing the piston, the piston being moved by a pressure of a substance intermittently applied to the distributor against a force of the elastic body, a predetermined volume of the substance to be discharged from the distributor being determined by a distance of movement of the piston in the cylinder, wherein
   an inflow side and a discharge side of the cylinder chamber separated from each other by the piston are communicated each other by movement of the piston over a distance more than a distance of movement of a normal operation, such that a conduit for supplying the substance to the distributor and a delivery port of the distributor are communicated each other.

6. A quantitative distributor as set forth in claim 1, wherein an inflow side and a discharge side of the cylinder chamber separated from each other by the piston are communicated each other by movement of the piston over a distance more than a distance of movement of a normal operation, such that a conduit for supplying the substance to the distributor and a delivery port of the distributor are communicated each other.

7. A quantitative distributor as set forth in claim 5, wherein the inflow side and the discharge side of the cylinder chamber separated from each other by the piston are communicated each other by expanding an inner diameter of the cylinder at the point in which the piston is moved over a distance more than the distance of movement of the normal operation.

# ·Fig.1

# Fig.2

# Fig.3

# Fig.4

# Fig.5

# Fig.6

# Fig.7

# Fig. 8

# Fig.9
## PRIOR ART

DISTANCE OF MOVEMENT OF PISTON